# EUROPEAN PATENT APPLICATION

(11) **EP 4 668 416 A1**
(43) Date of publication of application: **24.12.2025**
(21) Application number: 23922272.2
(22) Date of filing: 21.08.2023
(51) Int. Cl.: H01M 10/615, H01M 10/63, H01M 10/6556, H01M 10/6567, H01M 10/657

(54) **ENERGY STORAGE SYSTEM AND SELF-HEATING METHOD THEREFOR**

(30) Priority: 14.02.2023 CN 202310143160
(71) Applicant: Sungrow Power Supply Co., Ltd., Hefei, Anhui 230088 (CN)
(72) Inventor: DENG, Kai, Hefei, Anhui 230088 (CN); LI, Le, Hefei, Anhui 230088 (CN); LIAN, Chao, Hefei, Anhui 230088 (CN); ZHANG, Weifeng, Hefei, Anhui 230088 (CN)
(74) Representative: Epping - Hermann - Fischer
(86) International application number: PCT/CN2023/113948
(87) International publication number: WO 2024/169149

(57) **Abstract**

Provided in the present application are an energy storage system and a self-heating method therefor. By means of the self-heating method for an energy storage system, when a battery temperature of the energy storage system is lower than a preset allowable operation temperature, an electric energy conversion apparatus is controlled to operate in a reactive operation mode; since a cooling liquid of the energy storage system can realize heat conduction with the electric energy conversion apparatus and a battery pack, heat brought about by the operation of the electric energy conversion apparatus can replace a heating apparatus in the prior art to heat the cooling liquid; the battery pack is then heated by means of the flow of the cooling liquid; and after the battery temperature reaches the preset allowable operation temperature, the electric energy conversion apparatus can be controlled to operate in a normal operation mode. Therefore, by means of the present application, a heating apparatus in the prior art can be omitted, thereby saving on costs; and a heating time can be shortened, thereby improving efficiency.

## Description

This application claims the priority to Chinese Patent Application No. 202310143160.0, titled "ENERGY STORAGE SYSTEM AND SELF-HEATING METHOD THEREFOR", filed on February 14, 2023 with the China National Intellectual Property Administration, which is incorporated herein by reference in its entirety.

### FIELD

The present disclosure relates to the technical field of power electronics, and in particular to an energy storage system and a self-heating method therefor.

### BACKGROUND

With the rapid development of energy storage technology, application scenarios and environments of energy storage technology are increasing, which requires the energy storage system to operate stably. Especially, in low-temperature environments below zero degree, due to a high sensitivity of a battery to temperature, a battery pack should be heated to a permissible operating temperature to enter a normal operation mode.

At present, to heat a battery pack, a heating apparatus is generally provided to a liquid cooling system to heat a coolant, and then the battery pack is heated through the flow of the coolant. However, this heating method requires a long time, has low efficiency and high cost.

### SUMMARY

An energy storage system and a self-heating method therefor are provided in the present disclosure to reduce heating time, improve efficiency, and reduce costs.

To achieve the foregoing objective, the following technical solutions are provided according to the present disclosure.

In a first aspect of the present disclosure, a self-heating method for an energy storage system is provided. The self-heating method includes:
determining whether a battery temperature of the energy storage system is lower than a preset permissible operating temperature;
controlling an electrical energy conversion apparatus in the energy storage system to operate in a reactive operation mode, to heat coolant in the energy storage system, in response to determining that the battery temperature is lower than the preset permissible operating temperature, where the coolant exchanges thermal energy with the electrical energy conversion apparatus and a battery pack; and
controlling the electrical energy conversion apparatus to operate in a normal operation mode, in response to the battery temperature rising to the preset permissible operating temperature.

In an embodiment, the energy storage system includes more than one electrical energy conversion apparatus, and a sum of reactive power of the electrical energy conversion apparatuses in the reactive operation mode is zero.

In an embodiment, the energy storage system includes an even number of electrical energy conversion apparatuses, and the electrical energy conversion apparatuses have the same rated power; and
controlling an electrical energy conversion apparatus in the energy storage system to operate in a reactive operation mode includes: controlling half of the electrical energy conversion apparatuses to operate at full power with a positive reactive power, and controlling remaining half of the electrical energy conversion apparatuses to operate at full power with a negative reactive power.

In an embodiment, after the determining whether a battery temperature of the energy storage system is lower than a preset permissible operating temperature, the self-heating method further includes:
controlling the electrical energy conversion apparatus to operate in the normal operation mode, in response to determining that the battery temperature is greater than or equal to the preset permissible operating temperature.

In an embodiment, before controlling the electrical energy conversion apparatus to operate, the self-heating method further includes:
pre-charging the electrical energy conversion apparatus through a bus.

In an embodiment, the pre-charging the electrical energy conversion apparatus through the bus includes:
obtaining a state-of-charge (SOC) of a battery cluster connected to the electrical energy conversion apparatus; and
pre-charging the electrical energy conversion apparatus through the bus with electrical energy from a source side or battery side of the electrical energy conversion apparatus, based on the SOC.

In an embodiment, the pre-charging the electrical energy conversion apparatus through the bus with electrical energy from the source side or battery side of the electrical energy conversion apparatus, based on the SOC includes:
determining whether the SOC is greater than a preset SOC lower limit;
pre-charging the electrical energy conversion apparatus through the bus with the electrical energy from the source side, in response to the SOC being less than or equal to the preset SOC lower limit; and
pre-charging the electrical energy conversion apparatus through the bus with the electrical energy from the battery side, in response to the SOC being greater than the preset SOC lower limit.

In an embodiment, the pre-charging the electrical energy conversion apparatus through the bus includes:
pre-charging the electrical energy conversion apparatus through the bus with source-side electrical energy or battery-side electrical energy.

In a second aspect, an energy storage system is provided in the present disclosure. The energy storage system includes: a controller, a cooling system, and at least one energy storage unit.

The energy storage unit includes: an electrical energy conversion apparatus and at least one battery cluster.

In the energy storage unit, the battery cluster is connected to at a battery side of the electrical energy conversion apparatus through a first pre-charge module, the electrical energy conversion apparatus is connected with a second pre-charge module in parallel.

The cooling system includes coolant configured to exchange thermal energy with the electrical energy conversion apparatus and a battery pack in the battery cluster to adjust a battery temperature;
the electrical energy conversion apparatus, the first pre-charge module, and the second pre-charge module are controlled by the controller; and
the controller is configured to execute the self-heating method for the energy storage system according to any embodiment of the first aspect.

In an embodiment, the energy storage system includes more than one energy storage unit, and the electrical energy conversion apparatuses are connected in parallel at source sides of the electrical energy conversion apparatuses.

In an embodiment, the first pre-charge module and the second pre-charge module include: a switch and a resistor, and the switch and the resistor are connected in series.

In an embodiment, the first pre-charge module is connected in parallel with a direct-current switch of a power transmission circuit at a battery side of the electrical energy conversion apparatus.

In an embodiment, the cooling system includes: a coolant transfer pipeline, a pump, and a valve, where
the coolant flows in the coolant transfer pipeline and flows through the pump and the valve; and
the coolant transfer pipeline passes through the electrical energy conversion apparatus and the battery pack.

In an embodiment, the electrical energy conversion apparatus is a power conversion system PCS.

In the self-heating method for the energy storage system provided by the present disclosure, the electrical energy conversion apparatus is controlled to operate in the reactive operation mode, when the battery temperature of the energy storage system is lower than the preset permissible operating temperature. Since the coolant of the energy storage system can perform heat exchange with the electrical energy conversion apparatus and the battery pack, the thermal energy generated from the operation of the electrical energy conversion apparatus is able to replace the thermal energy generated by the heating apparatus in the relational technology to heat the coolant. The coolant flows to heat the battery pack. The electrical energy conversion apparatus is controlled to operate in a normal operation mode once the battery temperature rises to the preset permissible operating temperature. Therefore, the heating apparatus in the relational technology is removed in the present disclosure, thereby saving costs, reducing heating time and improving efficiency.

### BRIEF DESCRIPTION OF THE DRAWINGS

In order to more clearly illustrate technical solutions in embodiments of the present disclosure or in the relational technology, the drawings to be used in the description of the embodiments or the relational technology are briefly described below. Apparently, the drawings in the following description show only some embodiments of the present disclosure, and other drawings may be obtained by those skilled in the art from the drawings without any creative work.
FIG. 1 is a schematic structural diagram of a cooling system of an energy storage system according to an embodiment of the present disclosure;
FIG. 2 is a flowchart of a self-heating method for an energy storage system according to an embodiment of the present disclosure;
FIG. 3 is a flowchart of a self-heating method for an energy storage system according to another embodiment of the present disclosure;
FIG. 4 is a flowchart of a self-heating method for an energy storage system according to another embodiment of the present disclosure;
FIG. 5 is a flowchart showing partial procedure of a self-heating method for an energy storage system according to an embodiment of the present disclosure; and
FIG. 6 is a schematic structural diagram of an energy storage system according to an embodiment of the present disclosure.

### DETAILED DESCRIPTION

The technical solutions according to the embodiments of the present disclosure will be described clearly and completely as follows in conjunction with the drawings in the embodiments of the present disclosure. It is apparent that the described embodiments are only some of the embodiments according to the present disclosure, rather than all the embodiments. Any other embodiments obtained by those skilled in the art based on the embodiments of the present disclosure without any creative work fall within the protection scope of the present disclosure.

The terms "include", "comprise" or any other variants thereof are intended to be non-exclusive. Therefore, a process, method, article or device including a series of elements include not only these elements but also other elements that are not clearly enumerated, or further include elements inherent in the process, method, article or device. Unless expressively limited, the statement "including a..." does not exclude the case that other similar elements may exist in the process, method, article or device including the series of elements.

A self-heating method for an energy storage system is provided in the present disclosure, to reduce heating time, improve efficiency, and reduce costs.

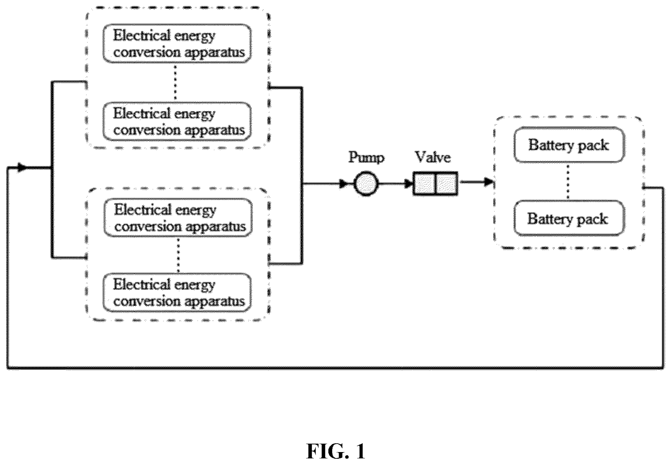

As shown in FIG. 1, in the cooling system of the energy storage system, the coolant transfer pipeline passes through the electrical energy conversion apparatus and the battery pack. When the energy storage system includes more than one electrical energy conversion apparatus and/or more than one battery pack, the coolant transfer pipeline is arranged to pass through all of electrical energy conversion apparatuses and battery packs, thereby exchanging thermal energy with all electrical energy conversion apparatuses and battery packs.

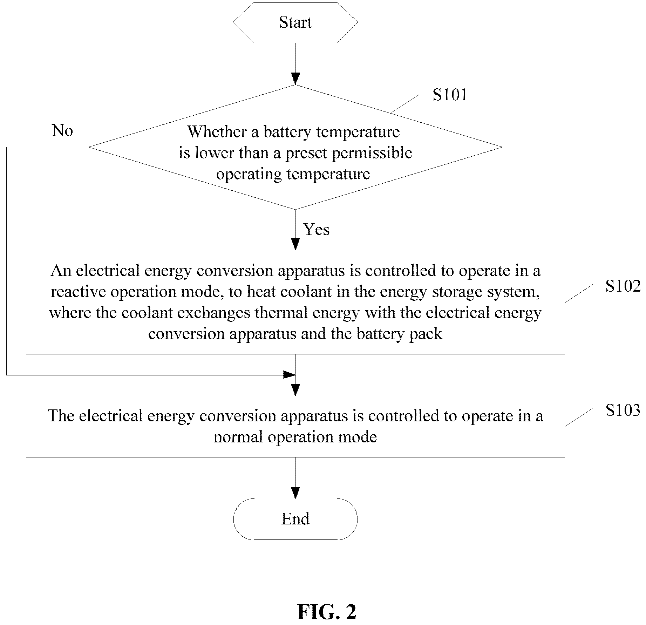

As shown in FIG. 2, a self-heating method for an energy storage system includes steps S101 to S103.

In step S101, it is determined whether a battery temperature of the energy storage system is lower than a preset permissible operating temperature.

The battery temperature refers to a parameter for indicating a temperature of a battery pack in the energy storage system. The battery temperature may be an average of the internal temperatures detected in the respective battery packs, or may be a detected ambient temperature for all battery packs, which depends on specific application environments, and all of them fall within the protection scope of the present disclosure.

When the battery temperature is lower than the preset permissible operating temperature, step S102 is executed.

In step S102, an electrical energy conversion apparatus in the energy storage system is controlled to operate in a reactive operation mode, to heat coolant in the energy storage system, where the coolant exchanges thermal energy with the electrical energy conversion apparatus and the battery pack.

During the operation of the electrical energy conversion apparatus, the operation of internal power devices of the electrical energy conversion apparatus may generate a certain amount of thermal energy. The thermal energy is transferred to the coolant to heat the coolant, instead of the heating device in the relational technology.

Moreover, since the electrical energy conversion apparatus operates in the reactive operation mode, energy consumption of the energy storage system is avoided.

S103 is executed, when the battery temperature rises to the preset permissible operating temperature.

In step S103, the electrical energy conversion apparatus is controlled to operate in a normal operation mode.

That is, before the electrical energy conversion apparatus enters the normal operation mode, for example, step S101 is executed in response to a reception of an operation instruction. If the battery temperature is low, the battery pack is heated by executing step S102. In the case that the preset permissible operating temperature is reached by operating in the reactive operation mode for a period of time, the electrical energy conversion apparatus is switched to operate in the normal operation mode for charging and discharging. Further, after step S101 is executed, if the battery temperature is greater than or equal to the preset permissible operating temperature, step S103 is executed directly.

In the self-heating method for the energy storage system provided by the present embodiment, the electrical energy conversion apparatus is controlled to operate in the reactive operation mode, when the battery temperature of the energy storage system is lower than the preset permissible operating temperature. The thermal energy generated from the operation of the electrical energy conversion apparatus is able to replace the thermal energy generated by the heating apparatus in the relational technology to heat the coolant. The coolant flows to heat the battery pack. The electrical energy conversion apparatus is controlled to operate in the normal operation mode once the battery temperature rises to the preset permissible operating temperature. Therefore, the heating apparatus in the relational technology is removed, thereby saving costs, reducing heating time and improving efficiency.

Based on the previous embodiment, in a self-heating method according to an embodiment of the present embodiment, the energy storage system includes more than one electrical energy conversion apparatus, and a sum of reactive powers of electrical energy conversion apparatuses in the reactive operation mode is zero, thereby avoiding the influence on an external power supply of the energy storage system.

For example, if the electrical energy conversion apparatus is a Power Conversion System (PCS), each PCS has an alternating-current side generally connected to the power grid through a transformer. In this condition, if the sum of the reactive powers of all PCSs is zero, the coolant is heated by the thermal energy generated by the PCSs without affecting the power grid.

Specifically, if the energy storage system includes an even number of electrical energy conversion apparatuses and the electrical energy conversion apparatuses are the same rated power, in a process of controlling the electrical energy conversion apparatuses to operate in a reactive operation mode, half of the electrical energy conversion apparatuses operate at full power with a positive reactive power, and the other half of the electrical energy conversion apparatuses operate at full power with a negative reactive power. In this way, the impact on the external power supply connected with the energy storage system is avoided, and the thermal energy generated by electrical energy conversion apparatus is large, thereby achieving quick heating.

In practical applications, if the energy storage system includes an odd number electrical energy conversion apparatuses or the rated powers of the respective electrical energy conversion apparatuses are different, the sum of reactive powers may be configured to zero, or near zero, by the power distribution of the respective electrical energy conversion apparatuses, to avoid the impact on the external power supply connected with the energy storage system. The specific distribution method may be determined depending on actual situations, which is not described in detail herein.

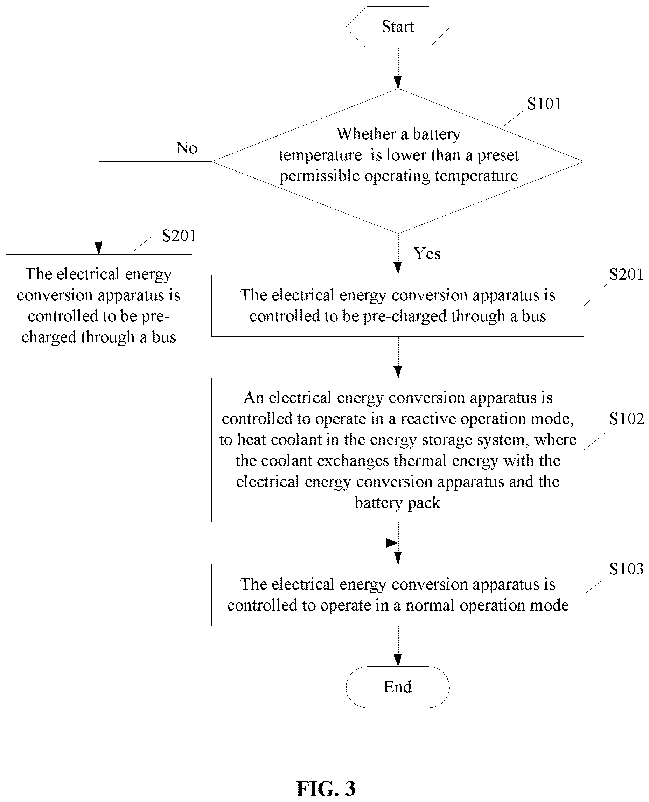

Based on the embodiments described above, a self-heating method provided in an embodiment further includes step S102 shown in FIG. 3, before controlling the electrical energy conversion apparatus to operate, for example, before executing step S102 in response to the low battery temperature or before executing S103 in response to the normal battery temperature.

In step S201, the electrical energy conversion apparatus is controlled to be pre-charged through a bus.

In practical applications, a pre-charging module can be provided at a battery side of the electrical energy conversion apparatus connected to each battery cluster, such as a direct-current side of the PCS. In addition, a source side of the electrical energy conversion apparatus connected to the power supply, such as an alternating-current side of the PCS, may be connected to the battery side of the power supply through a pre-charging module. Therefore, in step S201, the electrical energy conversion apparatus may be pre-charged through the bus with electrical energy from the source side or the battery side, which depends on specific application environments, and all of them are within the protection scope of the present disclosure.

That is, when the energy storage system actually operates in the reactive power mode, the energy storage system may slowly start to perform pre-charging from the battery side, and then connected to the power grid to generate reactive power; or may start to perform pre-charging through the bus from the source side, and then connected to the power grid to generate reactive power.

It should be noted that this self-heating method is based on reactive power characteristic and theoretically, the battery pack is heated without consuming energy. However, in practical applications, such as when the electrical energy conversion apparatus operates at full power with a reactive power, a certain direct-current loss may be generated in the electrical energy conversion apparatus. Taking a PCS of a rated power about 200kW as an example, the direct-current loss of one PCS during operation is about 1kW. Therefore, in a low-temperature environment, factors such as the SOC (state of charge, also known as remaining power) of the battery cluster should be considered to determine an appropriate start-up manner. For example, in the case that the SOC is at a lower limit, if the electrical energy conversion apparatus is still started from the battery side and connected to the power grid to generate reactive power, the direct-current loss will be supplied by the battery side, which will further lower the SOC and cause greater damage to the battery.

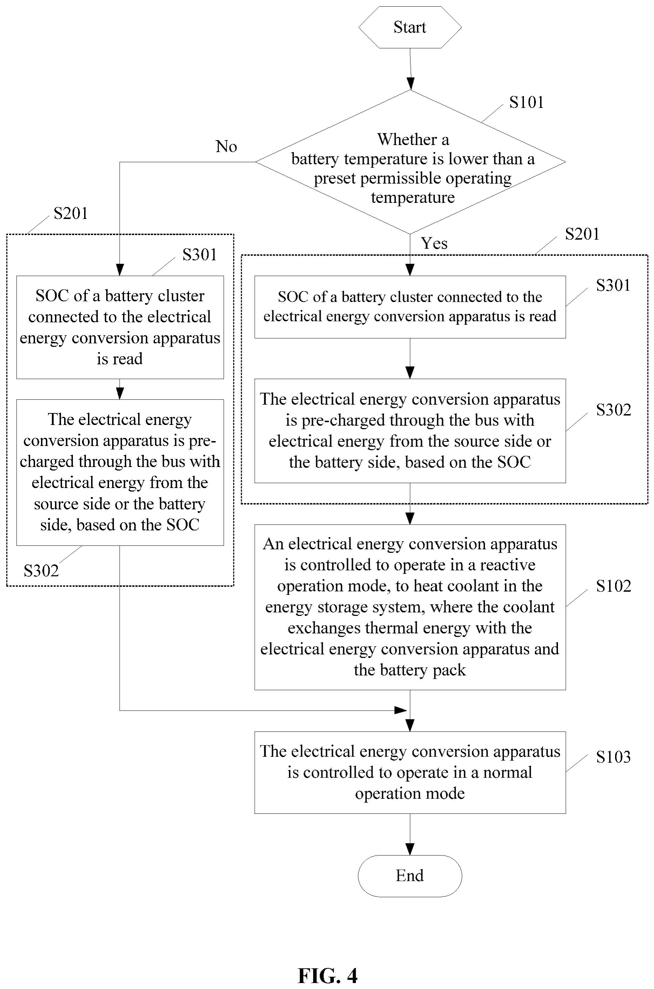

Therefore, in a self-heating method provided in an embodiment of the present embodiment, step S201 of pre-charging the electrical energy conversion apparatus through the bus specifically includes the following steps of S301 and S302 shown in FIG. 4.

In step S301, SOC of a battery cluster connected to the electrical energy conversion apparatus is read.

In step S302, the electrical energy conversion apparatus is pre-charged through the bus with electrical energy from the source side or the battery side, based on the SOC.

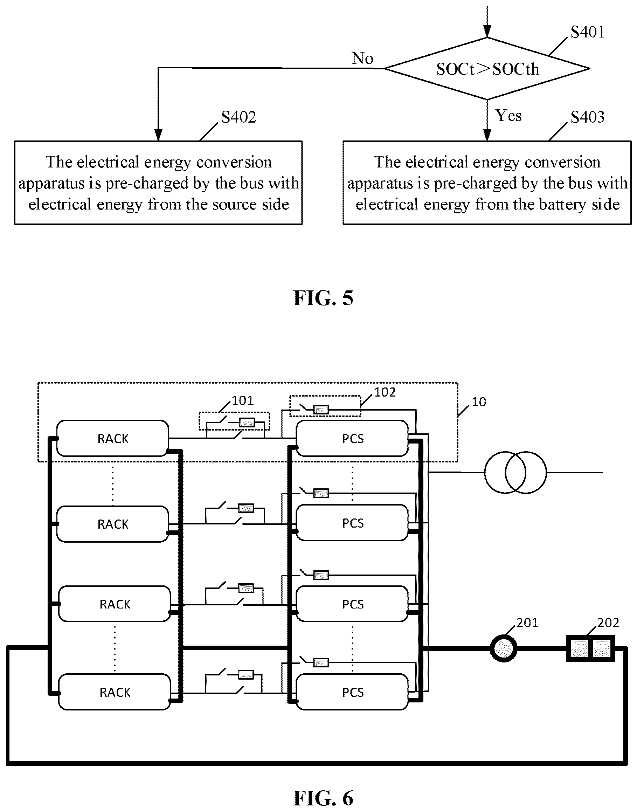

Furthermore, step S302 may specifically include the following steps S401 to S403, as shown in FIG. 5.

In step S401, it is determined whether the SOC is greater than a preset SOC lower limit.

Step S402 is executed in the case that the SOC is equal to or less than the preset SOC lower limit. Step S403 is executed in the case that the SOC greater than the preset SOC lower limit.

In step S402, the electrical energy conversion apparatus is pre-charged by the bus with electrical energy from the source side.

In step S403, the electrical energy conversion apparatus is pre-charged by the bus with electrical energy from the battery side.

Specifically, the read SOC of a current battery cluster is recorded as SOCt, and the preset SOC lower limit is recorded as SOCth. Further, the SOCt is compared with the SOCth. If SOCt≤SOCth, the electrical energy conversion apparatus is pre-charged by the bus with electrical energy from the source side, without consuming energy from the battery side. Then, the electrical energy conversion apparatus is connected to the power grid and operates in the reactive operation mode, to improve the temperature of the coolant. If SOCt>SOCth, the electrical energy conversion apparatus is pre-charged by the bus with electrical energy from the battery side. Then, the electrical energy conversion apparatus is connected to the power grid and operates in the reactive operation mode, to improve the temperature of the coolant, thereby avoiding the consumption of electrical energy from the source side.

That is, in this embodiment, the start-up operation mode is determined based on the SOC state of the battery cluster at low temperature, to avoid the risk that the SOC of the battery is further decreased in the case that in the self-heating mode of the energy storage system, the electrical energy conversion apparatus still obtains energy from the battery side even if the SOC is too low.

In an embodiment of the present disclosure, an energy storage system is further provided. As shown in FIG. 6, the energy storage system includes: a controller (not shown in FIG. 6), a cooling system, and at least one energy storage unit 10.

The energy storage unit 10 includes an electrical energy conversion apparatus (PCS as shown in FIG. 6) and at least one battery cluster (RACK as shown in FIG. 6). In practical applications, if more than one battery cluster is connected to the battery side of the electrical energy conversion apparatus, battery clusters may be connected in parallel with each other. In FIG. 6, one battery cluster connected to one electrical energy conversion apparatus is shown as an example. The battery cluster may include multiple battery packs connected in series.

Moreover, in the energy storage unit 10, a battery cluster is connected to the battery side of the electrical energy conversion apparatus, that is, the direct-current side of the PCS through a corresponding first pre-charge module 101. A second pre-charge module 102 is connected to the electrical energy conversion apparatus in parallel.

In practical applications, both the first pre-charge module 101 and the second pre-charge module 102 may include a switch and a resistor connected in series. The switch in the corresponding pre-charge module is turned on when the pre-charging is performed by the bus.

When the electrical energy conversion apparatus is pre-charged through the bus with electrical energy from the source side, the electrical energy on both sides of the electrical energy conversion apparatus pass through the second pre-charge module 102, instead of passing through the electrical energy conversion apparatus.

Further, the first pre-charge module 101 is connected in parallel with a direct-current switch of a power transmission circuit on the battery side of electrical energy conversion apparatus. Furthermore, when the electrical energy conversion apparatus is pre-charged through the bus with electrical energy from the battery side, the direct-current switch is in an off state, and the switch of the first pre-charge module 101 is in an on state.

Further, as shown in FIG. 6, when the number of energy storage unit 10 is greater than 1, the respective electrical energy conversion apparatuses are connected in parallel at the source side, that is, the alternating-current sides of the PCSs. Moreover, the respective PCSs, connected in parallel at the alternating-current sides, may be connected to the power grid through a transformer. In FIG. 6, thin lines show a power path of the energy storage system, and thick lines show a heat exchange path of the energy storage system.

Coolant of the cooling system is used for exchanging thermal energy with the electrical energy conversion apparatus and the battery pack, to adjust a battery temperature. Further, referring to FIG. 6, the cooling system may include: a coolant transfer pipeline (as shown by the thick lines in FIG.6), a pump 201, and a valve 202. The coolant flows in the coolant transfer pipeline, and flows through the pump 201 and the valve 202. Further, the coolant transfer pipeline passes through the electrical energy conversion apparatus and the battery pack.

The electrical energy conversion apparatus, the first pre-charge module 101, and the second pre-charge module 102 are controlled by a controller. The controller is configured to perform the self-heating method for the energy storage system according to any one of the embodiments described above. A detailed process and a principle of the self-heating method may be referred to the embodiments described above, which will not be repeated herein.

With the self-heating method, at low temperature, the energy storage system can heat the coolant with the thermal energy generated by the reactive power of the electrical energy conversion apparatus connected to the power grid, thereby increasing the ambient temperature of the battery and achieving grid-connected charging and discharging at the low temperature.

The same or similar parts among the embodiments in this specification may be referred to each other, and each of the embodiments emphasizes differences from other embodiments. In particular, the system or system embodiment is basically similar to the method embodiment, and therefore is described relatively briefly. For relevant details, reference can be made to the corresponding description of the method embodiment. The system and system embodiments described above are only illustrative, in which the units described as separate components may or may not be physically separated, and the components shown as units may or may not be physical units, that is, may be arranged in one place, or distributed over multiple network elements. Some or all of the modules may be selected as needed to achieve the objective of the solution of the embodiments. Those skilled in the art can understand and implement the solution without any creative effort.

Those skilled in the art may further realize that the units and algorithm steps of each example described in conjunction with the embodiments disclosed herein can be implemented by electronic hardware, computer software, or a combination of both. In order to clearly illustrate the interchangeability of hardware and software, the modules and steps of each example have been described in general terms of functionality in the above description. Whether these functions are performed in hardware or software depends on the specific application and design constraints of the technical solution. Those skilled in the art may implement the described functionality in various manners for each specific application, while such implementations should not be considered to be beyond the scope of the present disclosure.

Based on the above description of the disclosed embodiments, the features described in the different embodiments in this specification may be replaced or combined with each other, so that those skilled in the art can implement or use the present disclosure. Various modifications to these embodiments will be apparent by those skilled in the art, and the generic principles defined herein may be implemented in other embodiments without departing from the spirit or scope of the present disclosure. Therefore, the present disclosure is not limited to the embodiments described herein, but should be in accordance with the broadest scope consistent with the principle and novel features disclosed herein.

## Claims

1. A self-heating method for an energy storage system, **characterized by**, comprising:
determining whether a battery temperature of the energy storage system is lower than a preset permissible operating temperature;
controlling an electrical energy conversion apparatus in the energy storage system to operate in a reactive operation mode, to heat a coolant in the energy storage system, in response to determining that the battery temperature being lower than the preset permissible operating temperature, wherein the coolant exchanges thermal energy with the electrical energy conversion apparatus and a battery pack; and
controlling the electrical energy conversion apparatus to operate in a normal operation mode, in response to the battery temperature rising to the preset permissible operating temperature.

2. The self-heating method for the energy storage system according to claim 1, wherein the energy storage system comprises more than one electrical energy conversion apparatus, and a sum of reactive powers of the respective electrical energy conversion apparatuses in the reactive operation mode is zero.

3. The self-heating method for the energy storage system according to claim 2, wherein the energy storage system comprises an even number of electrical energy conversion apparatuses, and the electrical energy conversion apparatuses have a same rated power; and
controlling an electrical energy conversion apparatus in the energy storage system to operate in a reactive operation mode comprises:
controlling half of the electrical energy conversion apparatuses to operate at full power with a positive reactive power, and
controlling remaining half of the electrical energy conversion apparatuses to operate at full power with a negative reactive power.

4. The self-heating method for the energy storage system according to claim 1, wherein after determining whether a battery temperature of the energy storage system is lower than a preset permissible operating temperature, the self-heating method further comprises:
controlling the electrical energy conversion apparatus to operate in the normal operation mode, in response to determining that the battery temperature is greater than or equal to the preset permissible operating temperature.

5. The self-heating method for the energy storage system according to any one of claims 1 to 4, wherein before controlling the electrical energy conversion apparatus to operate in the reactive operation mode or in the normal operation mode, the self-heating method further comprises:
pre-charging the electrical energy conversion apparatus through a bus.

6. The self-heating method for the energy storage system according to claim 5, wherein the pre-charging the electrical energy conversion apparatus through a bus comprises:
obtaining a state of charge, SOC, of a battery cluster connected to the electrical energy conversion apparatus; and
pre-charging the electrical energy conversion apparatus through the bus with electrical energy from a source side or battery side of the electrical energy conversion apparatus, based on the SOC.

7. The self-heating method for the energy storage system according to claim 6, wherein the pre-charging the electrical energy conversion apparatus through the bus with electrical energy from a source side or battery side of the electrical energy conversion apparatus, based on the SOC comprises:
determining whether the SOC is greater than a preset SOC lower limit;
pre-charging the electrical energy conversion apparatus through the bus with the electrical energy from the source side, in response to the SOC being less than or equal to the preset SOC lower limit; and
pre-charging the electrical energy conversion apparatus through the bus with the electrical energy from the battery side, in response to the SOC being greater than the preset SOC lower limit.

8. The self-heating method for the energy storage system according to claim 5, wherein the pre-charging the electrical energy conversion apparatus through a bus comprises:
pre-charging the electrical energy conversion apparatus through the bus with electrical energy from a source side or a battery side of the electrical energy conversion apparatus.

9. An energy storage system, **characterized by**, comprising: a controller, a cooling system, and at least one energy storage unit, wherein
the energy storage unit comprises: an electrical energy conversion apparatus and at least one battery cluster; wherein
in the energy storage unit, the battery cluster is connected to a battery side of the electrical energy conversion apparatus through a first pre-charge module; and the electrical energy conversion apparatus is connected with a second pre-charge module in parallel;
the cooling system comprises a coolant configured to exchange thermal energy with the electrical energy conversion apparatus and a battery pack in the battery cluster to adjust a battery temperature;
the electrical energy conversion apparatus, the first pre-charge module, and the second pre-charge module are controlled by the controller; and
the controller is configured to execute the self-heating method for the energy storage system according to any one of claims 1 to 8.

10. The energy storage system according to claim 9, wherein the energy storage system comprises more than one energy storage unit, and the electrical energy conversion apparatuses are connected in parallel at source sides of the electrical energy conversion apparatuses.

11. The energy storage system according to claim 9, wherein each of the first pre-charge module and the second pre-charge module comprises:
a switch and a resistor,
wherein the switch and the resistor are connected in series.

12. The energy storage system according to claim 9, wherein the first pre-charge module is connected in parallel with a direct-current switch of a power transmission circuit at a battery side of the electrical energy conversion apparatus.

13. The energy storage system according to any one of claims 9 to 12, wherein the cooling system comprises: a coolant transfer pipeline, a pump, and a valve; wherein
the coolant flows in the coolant transfer pipeline and flows through the pump and the valve; and
the coolant transfer pipeline passes through the electrical energy conversion apparatus and the battery pack.

14. The energy storage system according to any one of claims 9 to 12, wherein the electrical energy conversion apparatus is a power conversion system, PCS.
